# EUROPÄISCHE PATENTANMELDUNG

(11) **EP 4 368 594 A1**
(43) Veröffentlichungstag der Anmeldung: **15.05.2024**
(21) Anmeldenummer: 22206812.4
(22) Anmeldetag: 10.11.2022
(51) Int. Cl.: C04B 28/06, C04B 28/14, C04B 111/28

(54) **ZUSAMMENSETZUNG UND VERFAHREN ZUR HERSTELLUNG EINES DÄMMELEMENTS, DÄMMELEMENT**

(71) Anmelder: STO SE & Co. KGaA, 79780 Stühlingen (DE)
(72) Erfinder: Hitzler, Martin, 78244 Gottmadingen (DE); Fraunhoffer, Dominik, 78166 Donaueschingen (DE); Hirsch, Thomas, 78199 Bräunlingen (DE); Paucksch, Melanie, 82335 Berg (DE); Reiff, Jona, 78054 Villingen-Schwenningen (DE); Holzer, Michael, 78315 Radolfzell (DE); Sadrina, Frank, 79780 Stühlingen (DE)
(74) Vertreter: Gottschalk, Matthias

(57) **Zusammenfassung**

Die Erfindung betrifft eine aufschäumbare Zusammensetzung zur Herstellung eines Dämmelements, enthaltend
- ein Bindemittelsystem, das Portlandzement und Calciumaluminatzement als mineralische Bindemittelkomponenten und mindestens ein Polymerbindemittel, vorzugsweise eine Polymerdispersion, als organische Bindemittelkomponente aufweist,
- Wasser sowie
- Zusatzstoffe, die Luftporenbildner, Schaumstabilisatoren und Hydrophobierungsmittel umfassen.

Ferner betrifft die Erfindung ein Verfahren zur Herstellung eines Dämmelements unter Verwendung einer erfindungsgemäßen Zusammensetzung sowie ein Dämmelement, das aus einer erfindungsgemäßen Zusammensetzung hergestellt ist.

## Beschreibung

Die Erfindung betrifft eine Zusammensetzung und ein Verfahren zur Herstellung eines Dämmelements. Bei dem Dämmelement kann es sich insbesondere um eine zur Schall- und/oder Wärmedämmung einsetzbare Dämmplatte handeln. Je nach Anwendungsbereich können auch andere Formen und/oder Muster realisiert werden, so dass das Dämmelement besonders gut für den Einsatz in Nischen, Laibungen, Ecken und/oder an Kanten geeignet ist.

Darüber hinaus betrifft die Erfindung ein Dämmelement, das aus einer erfindungsgemäßen Zusammensetzung hergestellt ist.

### Stand der Technik

Dämmelemente zur Schall- und/oder Wärmedämmung von Gebäuden können aus den unterschiedlichsten Dämmstoffen hergestellt sein. Häufig jedoch, insbesondere im Fassadenbereich, finden Dämmelemente aus Polystyrol oder Polyurethan Einsatz. Denn diese weisen nicht nur gute Dämmwerte auf, sondern sind zudem vergleichsweise kostengünstig herzustellen. Die guten Dämmwerte sind vorrangig auf die luft- bzw. gasgefüllten Poren bzw. Zellen zurückzuführen, die beim Schäumen ausgebildet werden. Als nachteilig erweist sich jedoch das Brandverhalten dieser Dämmstoffe, so dass immer dann, wenn es erhöhte Anforderungen aus Sicht des Brandschutzes zu erfüllen gilt, andere, nicht brennbare Dämmstoffe zum Einsatz gelangen.

Derartige nicht brennbare Dämmstoffe sind zahlreich erhältlich. Bekannt sind insbesondere Dämmstoffe aus Mineralfasern, wie beispielsweise Glas- oder Steinwolle, oder aus Mineralschäumen. Dämmstoffe aus Mineralfasern weisen allerdings den Nachteil auf, dass bei der Verarbeitung Fasern freigesetzt werden, die in die Atemwege gelangen können. Dämmstoffe aus Mineralschäumen wiederum sind spröde und weisen eine geringe Scherfestigkeit auf, so dass es häufig zu Materialausbrüchen kommt. Im Vergleich zu anderen Dämmstoffen weisen Mineralschäume zudem nur mäßig gute Wärmedämmeigenschaften auf, da die Wärmeleitfähigkeit oftmals über 0,05 W/(m^{∗}K) liegt. Als kritisch erweist sich auch die hohe Wasseraufnahmefähigkeit typischer Mineralschäume. Trotz preiswerter Rohstoffe ist der Marktpreis von Mineralschäumen vergleichsweise hoch. Denn die Herstellung erfolgt in einem aufwendigen Hydrothermalprozess, um die erforderlichen mechanischen Festigkeiten zu erreichen. Technisch wird hierzu ein zeit- und kostenintensives Autoklavenverfahren eingesetzt.

Die vorliegende Erfindung ist mit der Aufgabe befasst, eine Zusammensetzung und ein Verfahren zur Herstellung eines nichtbrennbaren Dämmelements bereitzustellen, das gegenüber Dämmelementen aus herkömmlichen nichtbrennbaren Dämmstoffen verbesserte Eigenschaften aufweist, insbesondere im Hinblick auf mechanische Stabilität, Wärmedämmeigenschaften und Wasseraufnahmefähigkeit. Des Weiteren soll die Herstellung des nichtbrennbaren Dämmelements vereinfacht werden, um die Herstellungskosten zu senken.

Zur Lösung der Aufgabe werden die Zusammensetzung mit den Merkmalen des Anspruchs 1 sowie das Verfahren mit den Merkmalen des Anspruchs 14 vorgeschlagen. Vorteilhafte Weiterbildungen der Erfindung sind den jeweiligen Unteransprüchen zu entnehmen. Des Weiteren wird ein Dämmelement angegeben, das aus einer erfindungsgemäßen Zusammensetzung hergestellt ist.

### Offenbarung der Erfindung

Die vorgeschlagene Zusammensetzung zur Herstellung eines Dämmelements ist aufschäumbar. Sie enthält:
- ein Bindemittelsystem, das Portlandzement und Calciumaluminatzement als mineralische Bindemittelkomponenten und mindestens ein Polymerbindemittel, vorzugsweise eine Polymerdispersion, als organische Bindemittelkomponente aufweist,
- Wasser sowie
- Zusatzstoffe, die Luftporenbildner, Schaumstabilisatoren und Hydrophobierungsmittel umfassen.

Die vorgeschlagene Zusammensetzung enthält mineralische als auch organische Bindemittelkomponenten. Es liegt somit ein "hybrides" Bindemittelsystem vor. Das hybride Bindemittelsystem hat den Vorteil, dass ein aus einer entsprechenden Zusammensetzung hergestelltes Dämmelement die Vorteile mineralisch gebundener sowie organisch gebundener Dämmstoffe in sich vereint. Hier sind insbesondere die Nichtbrennbarkeit mineralisch gebundener Dämmstoffe und die guten Wärmedämmeigenschaften sowie die Elastizität organisch gebundener Dämmstoffe zu nennen.

Als weitere Vorteile sind zu nennen, dass ein aus der vorgeschlagenen Zusammensetzung hergestelltes Dämmelement - insbesondere im Vergleich zu einem Dämmelement, das aus einem herkömmlichen Mineralschaum hergestellt ist - eine verringerte Rohdichte und damit ein verringertes Gewicht aufweist, so dass sich die Handhabung des Dämmelements vereinfacht. Darüber hinaus führen die in der Zusammensetzung enthaltenen organischen Bindemittelkomponenten zu einer Verbesserung der mechanischen Eigenschaften des Dämmelements. Dieses ist daher deutlich weniger spröde und bruchanfällig als ein Dämmelement aus einem herkömmlichen Mineralschaum. Ein weiterer Vorteil ist die verringerte Wasseraufnahmefähigkeit, die bei einem Dämmelement aus einer erfindungsgemäßen Zusammensetzung somit sicher innerhalb der Normgrenzen liegt und im Idealfall einen Wert von 1,0 kg/m² nicht übersteigt.

Bei der Herstellung eines Dämmelements aus der vorgeschlagenen Zusammensetzung werden demnach über die mineralischen Bindemittelkomponenten insbesondere die Brandeigenschaften, die Grundfestigkeit und die Rohstoffkosten günstig beeinflusst, während die organischen Bindemittelkomponenten zu einer Verbesserung der Wärmedämmeigenschaften sowie der mechanischen Festigkeit beitragen. Darüber hinaus reduzieren sie die Wasseraufnahmefähigkeit eines aus der Zusammensetzung hergestellten Dämmelements.

Neben dem hybriden Bindemittelsystem sind in der vorgeschlagenen Zusammensetzung Luftporenbildner, Schaumstabilisatoren und Hydrophobierungsmittel als Zusatzstoffe enthalten. Diese in Kombination mit dem hybriden Bindemittelsystem tragen dazu bei, dass die Zusammensetzung aufschäumbar ist. Das Aufschäumen dient dem Einbringen von Luftporen, welche später auch die Struktur eines aus der Zusammensetzung hergestellten Dämmelements bestimmen und somit zu den guten Wärmedämmeigenschaften des Dämmelements beitragen.

Ein besonderer Vorteil der vorgeschlagenen Zusammensetzung ist, dass sie rein physikalisch aufgeschäumt werden kann, beispielsweise durch einfaches Rühren, sowohl maschinengestützt, als auch händisch. Alternativ können die Luftporen in einer chemischen Treibreaktion eingebracht werden. Das heißt, dass - im Unterschied zu herkömmlichen Mineralschäumen - auf ein aufwendiges und kostenintensives Autoklavierungsverfahren zur Erlangung der geforderten chemischphysikalischen sowie thermisch-hygrischen Eigenschaften verzichtet werden kann.

Damit sinken die Kosten bei der Herstellung von mineralschaumähnlichen Dämmelementen.

Die in der vorgeschlagenen Zusammensetzung enthaltenen Zusatzstoffe wirken vorrangig schaumbildend sowie schaumstabilisierend. Aufgabe des ferner enthaltenen Hydrophobierungsmittels ist es, die Wasseraufnahme zu regeln. Bei der Auswahl des Hydrophobierungsmittels ist darauf zu achten, dass dieses aufschäumbar sowie schaumkompatibel ist.

Die Aufschäumbarkeit der vorgeschlagenen Zusammensetzung ist jedoch nicht allein auf die enthaltenen Zusatzstoffe zurückzuführen, sondern auch auf die einzelnen Bindemittelkomponenten des hybriden Bindemittelsystems, das sowohl mineralische als auch organische Bindemittelkomponenten enthält.

Als mineralische Bindemittelkomponenten sind Portlandzement und Calciumaluminatzement enthalten. In dieser zementösen Bindemittelmischung trägt der Calciumaluminatzement zu einem beschleunigten Abbindeverhalten bei. Über die jeweiligen Anteile in der Bindemittelmischung können demnach die Reaktivität und die Frühfestigkeit geregelt werden.

Bei dem Portlandzement handelt es sich vorzugsweise um Portlandzement nach EN 197. Die besten Ergebnisse konnten mit einem Portlandzement CEM I 52,5 R erzielt werden.

Als Calciumaluminatzement wird vorzugsweise amorpher Calciumaluminatzement verwendet. Optional kann ferner Tonerdezement enthalten sein, der nachfolgend - zur besseren Unterscheidung vom amorphen Calciumaluminatzement - auch als kristalliner Calciumaluminatzement bezeichnet wird. Der amorphe Calciumaluminatzement führt im Vergleich mit den kristallinen Calciumaluminatphasen der Tonerdezemente zu einer erhöhten Reaktivität der Mischung und somit zu einer besseren Gefüge- und Feuchtigkeitsstabilität der Zusammensetzung.

Über die jeweiligen Bindemittelanteile in der zementösen Bindemittelmischung können die Reaktivität sowie die Früh- und Endfestigkeit der Zusammensetzung gesteuert werden. Auf diese Weise kann auch auf die offene Zeit der Zusammensetzung bei der Herstellung eines Dämmelements Einfluss genommen werden. Durch Variation der Anteile der enthaltenen mineralischen Bindemittelkomponenten kann die offene Zeit den jeweiligen Bedürfnissen und/oder Maschinenanforderungen optimal angepasst werden.

Um ein Dämmelement aus einer erfindungsgemäßen Zusammensetzung herzustellen, wird diese zunächst aufgeschäumt. Die aufgeschäumte Masse kann dann nach Art einer Vergussmasse in eine Form gegeben werden. Die Form, die weitgehend frei gestaltet werden kann, bestimmt zugleich die Form des Dämmelements. Somit sind auch Dämmelemente in anwendungsspezifischen Formen für den Einsatz in Nischen, Laibungen und/oder Ecken herstellbar. Die Herstellung eines Dämmelements aus einer erfindungsgemäßen Zusammensetzung wird weiter unten in Verbindung mit dem erfindungsgemäßen Verfahren näher beschrieben.

Wie bereits erwähnt, kann im Bindemittelsystem der vorgeschlagenen Zusammensetzung zusätzlich Tonerdezement bzw. kristalliner Calciumaluminatzement enthalten sein. Durch Zugabe von Tonerdezement können die Material- und Verarbeitungseigenschaften der Zusammensetzung optimal eingestellt werden. Alternativ oder ergänzend wird vorgeschlagen, dass ein Sulfatträger, vorzugsweise Calciumsulfat (CaSO4), enthalten ist. Das Zusetzen eines Sulfatträgers führt bei der Hydratation der zementösen Bindemittelmischung zur Ettringitbildung. Durch den hohen Kristallwassergehalt von Ettringit kommt es zu einer erhöhten Wasserbindung und zugleich zu einer Volumenzunahme. Der hohe Wasseranteil unterstützt die Nichtbrennbarkeit eines aus der Zusammensetzung hergestellten Dämmelements. Als Sulfatträger kann insbesondere Calciumsulfat in Form von Anhydrit, Hemi- oder Dihydrat sowie Mischungen davon enthalten sein.

Das Bindemittelsystem einer erfindungsgemäßen Zusammensetzung enthält vorzugsweise 1,0 - 50,0 Gew.-%, weiterhin vorzugsweise 10,0 - 40,0 Gew.-%, besonders bevorzugt 15,0 - 35,0 Gew.-% Portlandzement bezogen auf das Gesamtgewicht der Ausgangsstoffe.

Vorzugsweise sind zudem 0,5 - 30,0 Gew.-%, weiterhin vorzugsweise 3,0 - 20,0 Gew.-%, besonders bevorzugt 5,0 - 10,0 Gew.-% Calciumaluminatzement, insbesondere amorpher Calciumaluminatzement, bezogen auf das Gesamtgewicht der Ausgangsstoffe enthalten.

Sofern zusätzlich Tonerdezement enthalten ist, liegt vorzugsweise der Anteil bei maximal 35 Gew.-%, weiterhin vorzugsweise bei 3,0 - 20 Gew.-%, besonders bevorzugt bei 5,0 - 15,0 Gew.-% bezogen auf das Gesamtgewicht der Ausgangsstoffe. Der Anteil eines Sulfatträgers - sofern enthalten - beträgt maximal 20 Gew.-%, vorzugsweise 1,0 - 15,0 Gew.-%, weiterhin vorzugsweise 2,0 - 10,0 Gew.-%.

Um zu einem "hybriden" Bindemittelsystem zu gelangen, sind zudem organische Bindemittelkomponenten enthalten. Vorzugsweise sind 1,0 - 45,0 Gew.-%, weiterhin vorzugsweise 10,0 - 35,0 Gew.-%, besonders bevorzugt 15,0 - 25,0 Gew.-% Polymerbindemittel bezogen auf das Gesamtgewicht der Ausgangsstoffe enthalten.

Des Weiteren bevorzugt ist bzw. sind ein organisches Polymerbindemittel auf Basis von Vinylacetat/Ethylen-Copolymeren, Copolymeren auf Basis von Vinylaromaten, insbesondere Styrol, und Acrylaten und/oder Homo- oder Copolymeren auf Basis von Reinacrylaten enthalten. Besonders bevorzugt sind Copolymere aus Vinylacetat-Ethylen, Acrylsäureester-Acrylnitril, Acryl-/Methacrylsäureester, Styrol-Butylacrylat und/oder Acrylat-Homopolymer enthalten.

Die organischen Bindemittelkomponenten werden zweckmäßigerweise in Form einer wässrigen Polymerdispersion eingesetzt. Der Feststoffgehalt der wässrigen Bindemitteldispersion beträgt vorzugsweise 30 - 65 Gew.-%, weiterhin vorzugsweise 40 - 62 Gew.-%, besonders bevorzugt 45 - 62 Gew.-%.

Das hybride Bindemittelsystem einer erfindungsgemäßen Zusammensetzung kann demnach insbesondere folgende Bestandteile aufweisen:

| | |
|---|---|
| 1 - 45 Gew.-% | Polymerbindemittel, |
| 1 - 50 Gew.-% | Portlandzement, |
| 0,5 - 30 Gew.-% | amorpher Calciumaluminatzement, |
| 0 - 35 Gew.-% | Tonerdezement, |
| 0 - 20 Gew.-% | Sulfatträger |

Die mineralischen Bindemittelkomponenten des hybriden Bindemittelsystems benötigen Anmachwasser, so dass ferner Wasser zugegeben wird. Die vorgeschlagene Zusammensetzung kann insbesondere 20 - 40 Gew.-% Wasser enthalten.

Die in einer erfindungsgemäßen Zusammensetzung ferner enthaltenen Zusatzstoffe liegen vorzugsweise in den nachfolgend genannten Anteilen vor.

Luftporenbildner sind vorzugsweise 0,01 - 5,0 Gew.-%, weiterhin vorzugsweise 0,1 - 3,0 Gew.-%, besonders bevorzugt 0,2 - 2,0 Gew.-% bezogen auf das Gesamtgewicht der Ausgangsstoffe enthalten. Ferner bevorzugt sind Luftporenbildner aus der Gruppe der anionischen Tenside, vorzugsweise anionische Tenside auf Basis von Fettsäurederivaten, insbesondere Laurylethersulfaten oder Oleinsulfonaten, enthalten.

Schaumstabilisatoren sind vorzugsweise 0,1 - 20,0 Gew.-%, weiterhin vorzugsweise 0,3 - 15,0 Gew.-%, besonders bevorzugt 0,5 - 10,0 Gew.-% bezogen auf das Gesamtgewicht der Ausgangsstoffe enthalten. Des Weiteren bevorzugt sind Schaumstabilisatoren aus der Gruppe kolloidales Kieselsol, insbesondere amorphes kolloidales Kieselsol oder epoxysilanmodifizierte kolloidale Kieselerde, Alkohole, Glycole, beispielsweise Ethylenglycol, Glycolether, beispielsweise Butylglycol, Butyldiglycol und Propylenglycol-monoalkylether, oder Polyglycolether, insbesondere Polyethylenglycolmonoalkylether, bevorzugt amorphes kolloidales Kieselsol oder epoxysilanmodifizierte kolloidale Kieselerde, enthalten. Während die meisten der vorstehend genannten Schaumstabilisatoren aus der Literatur bekannt sind, hat sich überraschenderweise gezeigt, dass auch epoxysilanmodifizierte kolloidale Kieselerde schaumstabilisierend wirken können.

Hydrophobierungsmittel sind vorzugsweise 0,01 - 5,0 Gew.-%, weiterhin vorzugsweise 0,1 - 3,0 Gew.-%, besonders bevorzugt 0,2 - 2,0 Gew.-% bezogen auf das Gesamtgewicht der Ausgangsstoffe enthalten. Weiterhin bevorzugt sind Hydrophobierungsmittel aus der Gruppe der Alkali- und Erdalkaliseifen langkettiger Fettsäuren wie Oleate, Stearate oder Laurate, Silikonharze oder Polysiloxane enthalten.

Eine erfindungsgemäße Zusammensetzung enthält vorzugsweise die folgenden Ausgangsstoffe:

| | |
|---|---|
| 1 - 45 Gew.-% | Polymerbindemittel |
| 1 - 50 Gew.-% | Portlandzement |
| 0,5 - 30 Gew.-% | amorpher Calciumaluminatzement, |
| 0 - 35 Gew.-% | Tonerdezement |
| 0 - 20 Gew.-% | Sulfatträger |
| 20 - 40 Gew.-% | Wasser |
| 0,01 - 5,0 Gew.-% | Luftporenbildner |
| 0,1 - 20,0 Gew.-% | Schaumstabilisatoren |
| 0,01 - 5,0 Gew.-% | Hydrophobierungsmittel |
| 0 - 35 Gew.-% | weitere Additive |
| 0 - 30 Gew.-% | Füllstoffe |

jeweils bezogen auf das Gesamtgewicht der Ausgangsstoffe. Das heißt, dass optional weitere Additive und/oder Füllstoffe enthalten sein können. Bei den weiteren Additiven kann es sich beispielsweise um Dispergiermittel und/oder die Rheologie der Zusammensetzung beeinflussende Additive handeln. Als Füllstoffe können insbesondere silikatische und/oder karbonatische Füllstoffe enthalten sein, beispielsweise Talkum, Kalkstein, Marmor und/oder Dolomit, jeweils als Mehl oder Körnung. Alternativ oder ergänzend können Leichtfüllstoffe, wie beispielsweise Bims, Perlit, insbesondere expandierter Perlit, Blähglas, Blähton, Blähschiefer, Blähglimmer, insbesondere geblähtes oder geschäumtes Vermiculit, und/oder Hohlglaskugeln enthalten sein. Bevorzugt weisen die Leichtfüllstoffe eine Kornrohdichte gemäß DIN EN 1097-6 und DIN EN 1097-7 auf, die < 800 kg/m³, vorzugsweise < 600 kg/m³, weiterhin vorzugsweise < 500 kg/m³ beträgt. Insbesondere weisen die Leichtfüllstoffe eine Schüttdichte < 600 kg/m³, vorzugsweise < 500 kg/m³, weiterhin vorzugsweise < 400 kg/m³ auf. Die Schüttdichte von Leichtfüllstoffen kann gemäß dem Fachbuch "Füllstoffe", 2. Aufl., (dort Seiten 75 und 76) von Detlef Gysau mit Hilfe der Norm ISO 697 ermittelt werden.

Darüber hinaus wird ein Verfahren zur Herstellung eines Dämmelements unter Verwendung einer erfindungsgemäßen Zusammensetzung vorgeschlagen. Das Verfahren umfasst die Schritte:
a) Aufschäumen der Zusammensetzung, vorzugsweise mit Hilfe eines Rühr- und/oder Mischaggregats,
b) Eingeben der aufgeschäumten Zusammensetzung in eine Form und
c) Trocknen und/oder Härten der aufgeschäumten Zusammensetzung.

Da bei dem Verfahren eine erfindungsgemäße Zusammensetzung verwendet wird, kann das Aufschäumen rein physikalisch, das heißt mit sehr einfachen Mitteln bewirkt werden. Auch der Formgebungsprozess ist vergleichsweise einfach, da außer der Form keine Werkzeuge oder Apparate benötigt werden. Insbesondere kann auf den Einsatz eines Autoklavs verzichtet werden, der die Herstellungskosten deutlich in die Höhe treiben würde. Durch Verzicht auf den Einsatz eines Autoklavs wird Energie eingespart, zudem wird ein Produktionsengpass eliminiert.

Der Rührprozess kann in einem leistungsgeregeltem Rühr- und/oder Mischaggregat, wie beispielsweise einem Buffalo-Mischer oder einem Schnellrührsystem mit Schneebesen-Einsatz, durchgeführt werden. Alternativ können maschinengestützte Schaumgeneratoren, wie beispielsweise das Modell "Pico Mix XL" des Herstellers Hansa Industrie-Mixer GmbH & Co.KG verwendet werden.

Vorzugsweise wird in Schritt a) die Zusammensetzung gerührt, bis eine Nass-Schaumdichte < 600 g/L, weiterhin vorzugsweise < 500 g/L, besonders bevorzugt < 300 g/L, erreicht ist. Je geringer die Nass-Schaumdichte ist, desto größer ist der Anteil der Luftporen in der Zusammensetzung sowie in dem hieraus herzustellenden Dämmelement. Über die Nass-Schaumdichte können demnach die Wärmedämmeigenschaften des späteren Dämmelements eingestellt werden.

Um festzustellen, ob die gewünschte Nass-Schaumdichte erreicht ist, kann eine definierte Volumenmenge der aufgeschäumten Zusammensetzung entnommen und ausgewogen werden. Der Quotient aus Masse und Volumen ergibt dann die Nass-Schaumdichte.

Es ist allgemein bekannt, dass Feststoffe in Pulverform den Aufbau einer Schaumstruktur stören und/oder eine bereits aufgebaute Schaumstruktur mechanisch zerstören können. Die Verwendung einer erfindungsgemäßen Zusammensetzung, die sowohl flüssige als auch pulverförmige Bestandteile enthält, führt jedoch zu stabilen Schaumstrukturen, die nicht kollabieren.

Überraschend ist zudem, dass die gewählten Zusatzstoffe bzw. die gewählte Kombination aus oberflächenaktiven Verbindungen den Aufbau der Schaumstruktur nicht stören. Für den Fachmann ist in diesem Zusammenhang insbesondere der Einfluss des Hydrophobierungsmittels nicht abschätzbar. Überraschenderweise kommt es nicht zu porenzerstörenden Wechselwirkungen zwischen den Luftporenbildnern und den Schaumstabilisatoren auf der einen Seite und dem Hydrophobierungsmittel auf der anderen Seite.

Gemäß einer ersten bevorzugten Ausführungsform der Erfindung werden in Schritt a) die flüssigen Bestandteile, insbesondere das Wasser und die Polymerdispersion, vorgelegt und die pulverförmigen Bestandteile, insbesondere die Zement-Komponenten und die Zusatzstoffe, werden unter Rühren zugegeben. Durch das Rühren wird eine Homogenisierung der Masse erreicht, die das Aufschäumen erleichtert.

Gemäß einer weiteren bevorzugten Ausführungsform werden in Schritt a) die flüssigen Bestandteile, insbesondere das Wasser und die Polymerdispersion, und die pulverförmigen Bestandteile, insbesondere die Zement-Komponenten und die Zusatzstoffe getrennt voneinander vorgemischt, dann vereint und unter Rühren homogenisiert. Durch das getrennte Vormischen der flüssigen und festen Komponenten kann eine noch bessere Homogenisierung der Masse erreicht werden.

Das Trocknen und/oder Härten in Schritt c) kann unter normalen Raumbedingungen oder bei erhöhter Temperatur durchgeführt werden, um den Prozess zu beschleunigen. Der Trocknungs- und/oder Härtungsprozess beinhaltet das Abbinden der zementösen Bestandteile. Um sicherzustellen, dass diese vollständig abgebunden sind, kann nach dem Trocknen und/oder Härten sowie dem Ausformen noch eine Reifezeit eingehalten werden.

Des Weiteren wird ein Dämmelement vorgeschlagen, das aus einer erfindungsgemäßen Zusammensetzung hergestellt ist. Die Herstellung erfolgt vorzugsweise nach dem zuvor beschriebenen erfindungsgemäßen Verfahren. Das Dämmelement kann auf diese Weise besonders einfach und kostengünstig hergestellt werden. Die Herstellung nach dem erfindungsgemäßen Verfahren ist möglich, da zur Herstellung eine erfindungsgemäße aufschäumbare Zusammensetzung verwendet wird.

Das angegebene Dämmelement ist nichtbrennbar oder zumindest schwerentflammbar ohne brennendes Abtropfen oder Abfallen von Bestandteilen und weist zudem hervorragende Wärmedämmeigenschaften auf (mit einer Wärmeleitfähigkeit ≤ 0,045 W(m^{∗}K)). Das Dämmelement zeichnet sich zudem durch eine vergleichsweise niedrige Wasseraufnahme aus. Des Weiteren weist das Dämmelement eine reduzierte Rohdichte und damit ein reduziertes Gewicht auf, so dass es einfach zu handhaben ist. Verbesserte mechanische Eigenschaften, wie geringere Sprödigkeit und Bruchanfälligkeit, tragen ebenfalls zu einer besseren Handhabbarkeit bei.

Bevorzugter Anwendungsbereich eines erfindungsgemäßen Dämmelements sind Wärmedämmverbundsysteme. Hier treten die Vorteile eines erfindungsgemäßen Dämmelements besonders deutlich hervor. Denn aufgrund der Nichtbrennbarkeit bzw. hohen Flammwidrigkeit und der kostengünstigen Herstellung kann das Dämmelement als Dämmplatte in der gesamten Fläche einer Fassade eingesetzt werden. Durch die stark reduzierte Bruchanfälligkeit der Dämmplatte wird zudem die Haftung zwischen der Dämmplatte und einem Kleber verbessert, mittels welcher die Dämmplatte auf einem bauseitigen Untergrund angebracht ist. Baustellenseitig kann somit ggf. auf eine aufwendige Spezialverdübelung und/oder sonstige Sicherungsmaßnahmen verzichtet werden.

Nachfolgend sind zwei konkrete Beispiele einer erfindungsgemäßen Zusammensetzung sowie eine nicht erfindungsgemäße Zusammensetzung als Referenzbeispiel angegeben. Aus allen Zusammensetzungen wurden nach dem gleichen Verfahren Dämmelemente hergestellt, um deren Eigenschaften vergleichen zu können.

### Beispiel 1 (erfindungsgemäß)

| | |
|---|---|
| 20,0 Gew.-% | organisches Polymerbindemittel (Polymerdispersion, Feststoff ca. 50%) |
| 25,0 Gew.-% | Portlandzement (CEM I 52,5 R) |
| 8,0 Gew.-% | amorpher Calciumaluminatzement |
| 10,0 Gew.-% | Tonerdezement |
| 27,5 Gew.-% | Wasser |
| 1,5 Gew.-% | Luftporenbildner (anionische Tenside) |
| 7,0 Gew.-% | Schaumstabilisatoren (modifiziertes kolloidales Kieselsol) |
| 1,0 Gew.-% | Hydrophobierungsmittel (Ca-Stearat) |
| 100 Gew.-% | |

### Beispiel 2 (erfindungsgemäß)

| | |
|---|---|
| 17,0 Gew.-% | organisches Polymerbindemittel (Polymerdispersion, Feststoff |
| | ca. 50%) |
| 33,0 Gew.-% | Portlandzement (CEM I 52,5 R) |
| 15,0 Gew.-% | amorpher Calciumaluminatzement |
| 0,0 Gew.-% | Tonerdezement |
| 25,5 Gew.-% | Wasser |
| 1,5 Gew.-% | Luftporenbildner (anionische Tenside) |
| 7,0 Gew.-% | Schaumstabilisatoren (modifiziertes kolloidales Kieselsol) |
| 1,0 Gew.-% | Hydrophobierungsmittel (Ca-Stearat) |
| 100 Gew.-% | |

### Referenzbeispiel (nicht erfindungsgemäß)

| | |
|---|---|
| 20,0 Gew.-% | organisches Polymerbindemittel (Polymerdispersion, Feststoff ca. 50%) |
| 25,0 Gew.-% | Portlandzement (CEM I 52,5 R) |
| 0,0 Gew.-% | amorpher Calciumaluminatzement |
| 18,0 Gew.-% | Tonerdezement |
| 27,5 Gew.-% | Wasser |
| 1,5 Gew.-% | Luftporenbildner (anionische Tenside) |
| 7,0 Gew.-% | Schaumstabilisatoren (modifiziertes kolloidales Kieselsol) |
| 1,0 Gew.-% | Hydrophobierungsmittel (Ca-Stearat) |
| 100 Gew.-% | |

Das Gesamtgewicht der Ausgangsstoffe betrug jeweils 2 kg. Zur Herstellung von Dämmelementen wurden jeweils die folgenden Schritte durchgeführt:
- Vorlegen von Wasser und der Polymerdispersion
- Zugeben der pulverförmigen Bestandteile unter Rühren, wobei erst die Zement-Komponenten und dann die weiteren Zusatzstoffe zugegeben wurden
- Rühren mit Hilfe eines Buffalo-Mischers mit Schneebesen-Einsatz bis zur geforderten Nass-Schaumdichte von 250 g/L.

Die aufgeschäumten Zusammensetzungen wurden dann jeweils in eine Form mit den Abmessungen 32,5 cm x 32,5 cm x 5 cm eingegeben und anschließend getrocknet bzw. ausgehärtet. Während der Trocknungs- bzw. Härtungsphase blieben die Formen jeweils oberseitig offen. Die Trocknungs- bzw. Härtungsphase erstreckte sich jeweils über drei Tage bei 23°C und 50% relativer Feuchte sowie über weitere drei Tage bei 50°C in einem Ofen.

Nach dem Ausformen wurden die Eigenschaften der Dämmelemente getestet, wobei die nachfolgende Tabelle die Testergebnisse zeigt:

| Zusammensetzung | Rohdichte n. EN 1602 [kg/m³] | Wärmeleitfähigkeit n. EN12667 [mW/(m^{∗}K)] | Wasseraufnahme n. EN 1609 [kg/m²] |
|---|---|---|---|
| Beispiel 1 | 135 | 40,2 | 1,1 |
| Beispiel 2 | 136 | 42,9 | 1,2 |
| Referenzbeispiel | - | - | - |

Leider konnte aus der als Referenzbeispiel dienenden Zusammensetzung kein Dämmelement geformt werden, da keine ausreichende Härtung in der Form stattfand. In Ermangelung eines Dämmelements konnten somit keine Werte hinsichtlich Rohdichte, Wärmeleitfähigkeit und Wasseraufnahmefähigkeit ermittelt werden. Die Spalten in der betreffenden Zeile sind daher leer.

Es konnte festgestellt werden, dass sich die Zusammensetzungen jeweils hinsichtlich ihrer offenen Zeit unterschieden. Während die offene Zeit bei den erfindungsgemäßen Rezepturen bei 14 Minuten (Beispiel 1) und 11 Minuten (Beispiel 2) lag, betrug sie bei dem Referenzbeispiel über 30 Minuten.

Aus einer Zusammensetzung gemäß dem Beispiel 1 wurde anschließend ein weiteres Dämmelement hergestellt, jedoch nach einem anderen Verfahren. Dabei wurden die folgenden Schritte ausgeführt:
- Mischen der pulverförmigen Zement-Komponenten durch händisches Schütteln in einem geschlossenen Behälter,
- Mischen der übrigen zumeist flüssigen Komponenten separat von den Zement-Komponenten,
- Mischen der vorgemischten Zement-Komponenten und der vorgemischten übrigen Komponenten,
- Eingeben der Mischung in einen Vorlagebehälter eines Schaumgenerators und Aufschäumen der Mischung mit Hilfe des Schaumgenerators bis zur geforderten Nass-Schaumdichte von 250 g/L.

Die aufgeschäumte Zusammensetzung wurden dann in eine Form mit den Abmessungen 32,5 cm x 32,5 cm x 5 cm eingegeben und getrocknet bzw. ausgehärtet. Während der Trocknungs- bzw. Härtungsphase bliebt die Form oberseitig offen. Die Trocknungs- bzw. Härtungsphase erstreckte sich über drei Tage bei 23°C und 50% relativer Feuchte sowie über weitere drei Tage bei 50°C in einem Ofen.

Nach dem Ausformen wurden die Eigenschaften des Dämmelements getestet, wobei die Ergebnisse in der nachfolgenden Tabelle angegeben sind:

| Zusammensetzung | Rohdichte n. EN 1602 [kg/m³] | Wärmeleitfähigkeit n. EN12667 [mW/(m^{∗}K)] | Wasseraufnahme n. EN 1609 [kg/m²] |
|---|---|---|---|
| Beispiel 1 | 136 | 39,9 | 0,9 |

Nach dem Ausformen kann das Dämmelement nachträglich bearbeitet werden. Beispielsweise kann es mittels einer Bandsäge zurechtgeschnitten werden und/oder die Flächen können auf ein bestimmtes Maß besäumt werden.

## Patentansprüche

1. Aufschäumbare Zusammensetzung zur Herstellung eines Dämmelements, enthaltend
- ein Bindemittelsystem, das Portlandzement und Calciumaluminatzement als mineralische Bindemittelkomponenten und mindestens ein Polymerbindemittel, vorzugsweise eine Polymerdispersion, als organische Bindemittelkomponente aufweist,
- Wasser sowie
- Zusatzstoffe, die Luftporenbildner, Schaumstabilisatoren und Hydrophobierungsmittel umfassen.

2. Zusammensetzung nach Anspruch 1,
**dadurch gekennzeichnet, dass** im Bindemittelsystem zusätzlich Tonerdezement und/oder ein Sulfatträger, vorzugsweise CaSO4, enthalten ist bzw. sind.

3. Zusammensetzung nach Anspruch 1 oder 2,
**dadurch gekennzeichnet, dass** 1,0 - 50,0 Gew.-%, vorzugsweise 10,0 - 40,0 Gew.-%, weiterhin vorzugsweise 15,0 - 35,0 Gew.-% Portlandzement bezogen auf das Gesamtgewicht der Ausgangsstoffe enthalten sind.

4. Zusammensetzung nach einem der vorhergehenden Ansprüche,
**dadurch gekennzeichnet, dass** 0,5 - 30,0 Gew.-%, vorzugsweise 3,0 - 20,0 Gew.-%, weiterhin vorzugsweise 5,0 - 10,0 Gew.-% Calciumaluminatzement bezogen auf das Gesamtgewicht der Ausgangsstoffe enthalten sind.

5. Zusammensetzung nach einem der vorhergehenden Ansprüche,
**dadurch gekennzeichnet, dass** 1,0 - 45,0 Gew.-%, vorzugsweise 10,0 - 35,0 Gew.-%, weiterhin vorzugsweise 15,0 - 25,0 Gew.-% Polymerbindemittel bezogen auf das Gesamtgewicht der Ausgangsstoffe enthalten sind.

6. Zusammensetzung nach einem der vorhergehenden Ansprüche,
**dadurch gekennzeichnet, dass** ein organisches Polymerbindemittel auf Basis von Vinylacetat/Ethylen-Copolymeren, Copolymeren auf Basis von Vinylaromaten, insbesondere Styrol, und Acrylaten und/oder Homo- oder Copolymeren auf Basis von Reinacrylaten, bevorzugt Copolymere aus Vinylacetat-Ethylen, Acrylsäureester-Acrylnitril, Acryl-/Methacrylsäureester, Styrol-Butylacrylat und/oder Acrylat-Homopolymer enthalten ist bzw. sind.

7. Zusammensetzung nach einem der vorhergehenden Ansprüche,
**dadurch gekennzeichnet, dass** 0,01 - 5,0 Gew.-%, vorzugsweise 0,1 - 3,0 Gew.-%, weiterhin vorzugsweise 0,2 - 2,0 Gew.-% Luftporenbildner bezogen auf das Gesamtgewicht der Ausgangsstoffe enthalten sind.

8. Zusammensetzung nach einem der vorhergehenden Ansprüche,
**dadurch gekennzeichnet, dass** Luftporenbildner aus der Gruppe der anionischen Tenside, vorzugsweise anionische Tenside auf Basis von Fettsäurederivaten, insbesondere Laurylethersulfaten oder Oleinsulfonaten, enthalten sind.

9. Zusammensetzung nach einem der vorhergehenden Ansprüche,
**dadurch gekennzeichnet, dass** 0,1 - 20,0 Gew.-%, vorzugsweise 0,3 - 15,0 Gew.-%, weiterhin vorzugsweise 0,5 - 10,0 Gew.-% Schaumstabilisatoren bezogen auf das Gesamtgewicht der Ausgangsstoffe enthalten sind.

10. Zusammensetzung nach einem der vorhergehenden Ansprüche,
**dadurch gekennzeichnet, dass** Schaumstabilisatoren aus der Gruppe kolloidales Kieselsol, insbesondere amorphes kolloidales Kieselsol oder epoxysilanmodifizierte kolloidale Kieselerde, Alkohole, Glycole, beispielsweise Ethylenglycol, Glycolether, beispielsweise Butylglycol, Butyldiglycol und Propylenglycol-monoalkylether, oder Polyglycolether, insbesondere Polyethylenglycolmonoalkylether, bevorzugt amorphes kolloidales Kieselsol oder epoxysilanmodifizierte kolloidale Kieselerde, enthalten sind.

11. Zusammensetzung nach einem der vorhergehenden Ansprüche,
**dadurch gekennzeichnet, dass** 0,01 - 5,0 Gew.-%, vorzugsweise 0,1 - 3,0 Gew.-%, weiterhin vorzugsweise 0,2 - 2,0 Gew.-% Hydrophobierungsmittel bezogen auf das Gesamtgewicht der Ausgangsstoffe enthalten sind.

12. Zusammensetzung nach einem der vorhergehenden Ansprüche,
**dadurch gekennzeichnet, dass** Hydrophobierungsmittel aus der Gruppe der Alkali- und Erdalkaliseifen langkettiger Fettsäuren wie Oleate, Stearate oder Laurate, Silikonharze oder Polysiloxane enthalten sind.

13. Zusammensetzung nach einem der vorstehenden Ansprüche,
**dadurch gekennzeichnet, dass**
- 1 - 45 Gew.-% Polymerbindemittel,
- 1 - 50 Gew.-% Portlandzement,
- 0,5 - 30 Gew.-% amorpher Calciumaluminatzement,
- 0 - 35 Gew.-% Tonerdezement,
- 0 - 20 Gew.-% Sulfatträger
- 20 - 40 Gew.-% Wasser,
- 0,01 - 5,0 Gew.-% Luftporenbildner,
- 0,1 - 20,0 Gew.-% Schaumstabilisatoren,
- 0,01 - 5,0 Gew.-% Hydrophobierungsmittel,
- 0 - 3 5 Gew.-% weitere Additive,
- 0 - 30 Gew.-% Füllstoffe
jeweils bezogen auf das Gesamtgewicht der Ausgangsstoffe enthalten sind.

14. Verfahren zur Herstellung eines Dämmelements unter Verwendung einer Zusammensetzung nach einem der vorhergehenden Ansprüche, umfassend die Schritte
a) Aufschäumen der Zusammensetzung, vorzugsweise mit Hilfe eines Rühr- und/oder Mischaggregats,
b) Eingeben der aufgeschäumten Zusammensetzung in eine Form und
c) Trocknen und/oder Härten der aufgeschäumten Zusammensetzung.

15. Verfahren nach Anspruch 14,
**dadurch gekennzeichnet, dass** in Schritt a) die Zusammensetzung gerührt wird, bis eine Nass-Schaumdichte < 600 g/L, vorzugsweise < 500 g/L, weiterhin vorzugsweise < 300 g/L, erreicht ist.

16. Verfahren nach Anspruch 14 oder 15,
**dadurch gekennzeichnet, dass** in Schritt a) die flüssigen Bestandteile, insbesondere das Wasser und die Polymerdispersion, vorgelegt werden und die pulverförmigen Bestandteile, insbesondere die Zement-Komponenten und die Zusatzstoffe, unter Rühren zugegeben werden.

17. Verfahren nach Anspruch 14 oder 15,
**dadurch gekennzeichnet, dass** in Schritt a) die flüssigen Bestandteile, insbesondere das Wasser und die Polymerdispersion, und die pulverförmigen Bestandteile, insbesondere die Zement-Komponenten und die Zusatzstoffe getrennt voneinander vorgemischt, dann vereint und unter Rühren homogenisiert werden.

18. Verfahren nach einem der Ansprüche 14 bis 17,
**dadurch gekennzeichnet, dass** das Trocknen und/oder Härten in Schritt c) unter normalen Raumbedingungen oder bei erhöhter Temperatur durchgeführt wird.

19. Dämmelement, das aus einer Zusammensetzung nach einem der Ansprüche 1 bis 13 hergestellt ist.
